# EUROPÄISCHE PATENTANMELDUNG

(11) **EP 2 269 446 A1**
(43) Veröffentlichungstag der Anmeldung: **05.01.2011**
(21) Anmeldenummer: 09164053.2
(22) Anmeldetag: 29.06.2009
(51) Int. Cl.: A01K 1/03

(54) **Modular aufgebautes IVC-Käfigsystem sowie für ein derartiges Käfigsystem geeignete Adapterplatte**

(71) Anmelder: BIT Analytical Instruments GmbH, 65824 Schwalbach (DE)
(72) Erfinder: Balger, Marius, 65193, Wiesbaden (DE)
(74) Vertreter: Staudt, Armin Walter

(57) **Zusammenfassung**

Ein bekanntes IVC-Käfigsystem umfasst ein Gestell (1) zur Aufnahme einer Vielzahl rasterartig in Käfigreihen und Käfigspalten angeordneten Käfigen, ein Belüftungssystem (2;3;5;6) zur Belüftung der Käfige und eine Belüftungssteuerung, wobei das Gestell (1) gegenüberliegende Seitenwände (7,8) aufweist, zwischen denen sich in vorgegebenem Höhenabstand waagerecht und parallel zueinander verlaufende Paare von Lüftungsrohren (4,5) erstrecken, an denen die Käfige abnehmbar gelagert sind, und die jeweils ein Zuluft-Lüftungsrohr (4) und ein Abluft-Lüftungsrohr bilden, wobei die Zuluft-Lüftungsrohre über ihre Länge mit Zuluftöffnungen für die Zufuhr von Zuluft in die Käfige versehen und mit einem Sammel-Zuluftrohr (2) fluidisch verbunden sind, und wobei die Abluft-Lüftungsrohre (5) über ihre Länge mit Abluftöffnungen zur Ableitung von Abluft aus den Käfigen versehen und mit einem Sammel-Abluftrohr (3) fluidisch verbunden sind. Um hiervon ausgehend ein modular aufgebautes IVC-Käfigsystem bereitzustellen, das flexibel erweiterbar ist, wird erfindungsgemäß vorgeschlagen, dass die Lüftungsrohr-Paare (4;5) und/oder Sammel-Abluftrohr (3) und Sammel-Zuluftrohr (2) verlängerbar ausgebildet sind und/oder dass Sammel-Zuluftrohr (2) und Sammel-Abluftrohr (3) über ihre Länge mit einer zweiten Reihe von Anschlüssen für Zuluft-Lüftungsrohre (4) und Abluft-Lüftungsrohr (5) versehen sind.

## Beschreibung

Die vorliegende Erfindung betrifft ein IVC-Käfigsystem, umfassend ein Gestell zur Aufnahme einer Vielzahl rasterartig in Käfigreihen und Käfigspalten angeordneten Käfigen, ein Belüftungssystem zur Belüftung der Käfige und eine Belüftungssteuerung, wobei das Gestell gegenüberliegende Seitenwände aufweist, zwischen denen sich in vorgegebenem Höhenabstand waagerecht und parallel zueinander verlaufende Paare von Lüftungsrohren erstrecken, an denen die Käfige abnehmbar gelagert sind, und die jeweils ein Zuluft-Lüftungsrohr und ein Abluft-Lüftungsrohr bilden, wobei die Zuluft-Lüftungsrohre über ihre Länge mit Zuluftöffnungen für die Zufuhr von Zuluft in die Käfige versehen und mit einem Sammel-Zuluftrohr fluidisch verbunden sind, und wobei die Abluft-Lüftungsrohre über ihre Länge mit Abluftöffnungen zur Ableitung von Abluft aus den Käfigen versehen und mit einem Sammel-Abluftrohr fluidisch verbunden sind.

Weiterhin betrifft die Erfindung eine Adapterplatte zur Anbindung eines Käfigs an das IVC-Käfigsystem.

### Stand der Technik

Im Bereich der experimentellen Medizin und der Versuchstierkunde werden IVC- Käfigregalsysteme (IVC: Individual Ventilated Cage) für die Haltung von Versuchstieren, insbesondere Labormäusen, Hamstern und Ratten verwendet. Die Versuchstiere werden dabei in steriler Luft gehalten, um Experimente unter Standardbedingungen durchführen zu können. Ein Käfigregalsystem besteht aus einem Satz baugleicher Käfige, welche rasterartig in Reihen nebeneinander und in Spalten übereinander angeordnet sind, und die jeweils die Haltung von Versuchstieren in einem spezifisch pathogenfreien Bereich ermöglichen.

Die Käfige sind in einem Gestell untergebracht, das in der Regel verfahrbar und mit Rollen versehen ist. Das Gestell umfasst Seitenwände, zwischen denen Rohre verlaufen, die als Konstruktionselemente zur Lagerung der Käfige und gleichzeitig als Zu- und Sammel-Abluftrohre für deren Belüftung dienen. Die Belüftung kann im Unterdruck oder im Überdruck erfolgen und wird durch eine Lüftungseinheit sichergestellt, die üblicherweise zwei Lüfter, Filter und eine Belüftungssteuerung umfasst, die ein Display und eine Bedieneinheit aufweist und die auch als "Airhändler" bezeichnet wird.

Ein derartiges IVC-Käfigsystem ist aus der DE 100 35 806 A1 bekannt. Das Gestell umfasst eine Anzahl von Belüftungsrohren, die gleichzeitig zur Lagerung und zur Belüftung der Käfige dienen. Die Rohre bilden Aufnahmen, in die die trogartigen Käfige von oben eingesetzt werden und über zwei Lüftungsanschlüsse, die sich in der Käfig-Seitenwand befinden, mit den Belüftungsrohren verbunden werden. Im unteren Bereich und innerhalb des Gestells ist eine Pumpe vorgesehen, die geeignet ist, Luft in die Käfige einzubringen und Luft aus den Käfigen abzusaugen. Die Enden der Belüftungsrohre sind verschließbar, beispielsweise mittels Deckel.

Das bekannte Gestell ist in Abhängigkeit von seiner Größe für eine vorgegebene Anzahl von Käfigen ausgelegt. Werden mehr Käfige benötigt, ist ein entsprechend größeres Gestell erforderlich.

Bei anderen Ausführungsformen von IVC-Käfigsystemen weist das Gestell ein Raster von Aufnehmern auf, in die die Käfige von vorne eingeschoben werden. Diese Aufnehmer sind ihrerseits in einer horizontalen Ebene federnd auf einem Edelstahlblech montiert. Das Edelstahlblech liegt wiederum auf waagerechten Zu- und Sammel-Abluftrohren der darunter liegenden Horizontalebene auf. Die Käfige werden also durch zwei Federn unter dem Aufnehmer nach oben an dort befindliche Anschlüsse für die Lüftung gedrückt. Diese Anschlüsse bestehen aus Kunststoff und sind in Aussparungen in den Rohren eingerastet. Sie stellen die Verbindung zwischen den Öffnungen in den Rohren und denen der Käfige her.

Bei dieser Ausführungsform stellen die Anschlüsse im Fall einer Käfigentnahme eine offene Verbindung zur Umgebung dar, wodurch ein Falschlufteffekt entsteht.

### Technische Aufgabenstellung

Der Erfindung liegt daher die Aufgabe zugrunde, ein modular aufgebautes IVC-Käfigsystem bereitzustellen, das flexibel erweiterbar ist.

Außerdem liegt der Erfindung die Aufgabe zugrunde, einen Adapter anzugeben, der für den Einsatz in einem erweiterbaren IVC-Käfigsystem geeignet ist, und bei dem die Gefahr von Falschlufteintrag vermindert ist.

Hinsichtlich des IVC-Käfigsystems wird diese Aufgabe ausgehend von einem Käfigsystem der eingangs genannten Gattung erfindungsgemäß dadurch gelöst, dass die Lüftungsrohr-Paare und/oder Sammel-Abluftrohr und Sammel-Zuluftrohr verlängerbar ausgebildet sind und/oder dass Sammel-Zuluftrohr und Sammel-Abluftrohr über ihre Länge mit einer zweiten Reihe von Anschlüssen für Zuluft-Lüftungsrohre und Abluft-Lüftungsrohr versehen sind.

Zur Belüftung des IVC-Käfigsystems sind Sammelrohre für die Zu- und Abluft vorgesehen, von denen sich jeweils zwei Lüftungsrohre in jede Käfigreihe verzweigen. Über das Zuluft-Lüftungsrohr erfolgt die Zufuhr von Zuluft in die Käfige der betreffenden Reihe, und über das Abluft-Lüftungsrohr erfolgt die Ableitung der Abluft aus den Käfigen der betreffenden Reihe.

Das erfindungsgemäße Käfigsystem ist modular aufgebaut und zur Aufnahme einer variablen Anzahl von Käfigen geeignet. Insbesondere kann das IVC-Käfigsystem nachträglich um eine gewünschte Anzahl von Käfigen erweitert werden, wenn sich dies als notwendig erweisen sollte. Hierzu ist das System in insgesamt drei Richtungen erweiterbar. Die Anzahl der Käfigspalten und die Anzahl der Käfigreihen kann erhöht werden, und es kann von einem einseitigen Raster auf ein doppelseitiges Raster erweitert werden, wobei jede dieser Erweiterungen mit jeder anderen kombinierbar ist.

Zur Erweiterung der Anzahl der Käfigspalten oder der Anzahl der Käfigreihen ist ein Gestell vorgesehen, bei dem die Lüftungsrohr-Paare und/oder das Sammel-Abluftrohr mitsamt dem Sammel-Zuluftrohr verlängerbar ausgebildet sind.

Zur Verdoppelung der zur Verfügung stehenden Käfige wird neben dem vorhandenen Käfigraster ein zweites Käfigraster einschließlich der dazugehörenden Zuluft-Lüftungsrohre und Abluft-Lüftungsrohre zur Verfügung gestellt, wobei das zweite Käfigraster die Seitenwände und das Sammel-Zuluftrohr und das Sammel-Abluftrohr des ersten Käfigraster nutzt. Die Seitenwände werden hierzu entsprechend verbreitert. Wichtig dabei ist, dass das Sammel-Zuluftrohr und das Sammel-Abluftrohrjeweils eine zusätzliche, zweite Reihe von Anschlüssen für den Anschluss der zusätzlichen Zuluft-Lüftungsrohre beziehungsweise eine zusätzliche, zweite Reihe von Anschlüssen für den Anschluss der zusätzlichen Abluft-Lüftungsrohre aufweisen. Bei dieser Ausführungsform des erfindungsgemäßen IVC-Käfigsystems ist somit ein - im maximalen Füllzustand - spiegelsymmetrisch aufgebautes Grundmodul vorgesehen, das von beiden Längsseiten zugänglich ist und das daher die doppelte Anzahl von Käfigen aufnehmen kann.

Die Verlängerung der zur Belüftung dienenden Rohrteile - also der Lüftungsrohre und der Sammelrohre für Abluft und Zuluft - erfolgt beispielsweise durch teleskopartiges Auseinanderziehen oder durch Hinzufügen von Erweiterungsstücken und Verbinden der Erweiterungsstücke mit den bestehenden Teilen. Die zuletzt genannte Variante erleichtert das Abdichten der Rohrteile nach Außen und erhöht die Zuverlässigkeit und Betriebssicherheit des Belüftungssystems. Daher erfolgt die Verlängerung der Lüftungsrohre und/oder von Sammel-Abluftrohr und Sammel-Zuluftrohr vorzugsweise mittels Verlängerungsrohrstücken.

Die Verlängerungsrohrstücke werden vorzugsweise an die Enden der jeweils zu verlängernden Rohre des Belüftungssystems angesetzt.

Die Verlängerung erfolgt hierbei durch Abnehmen eines Endstopfens und Einsetzen der Verlängerungsrohrstücke an das offene Lüftungsrohrende. Ergänzend können die miteinander verbundenen Rohrenden von einer Führungsbuchse umgeben sein, die zusätzlich zur Abdichtung der Verlängerungsstelle nach Außen beiträgt.

Im Hinblick auf die zuletzt genannte Ausführungsform hat es sich besonders bewährt, wenn das Verlängerungsrohrstück einen Innendurchmesser aufweist, der größer ist als der Außendurchmesser des jeweilig zu verlängernden Rohres, so dass das Verlängerungsrohrstück auf das zu verlängernde Rohr aufschiebbar ist, oder dass das Verlängerungsrohrstück einen Außendurchmesser aufweist, der kleiner ist als der Innendurchmesser des jeweilig zu verlängernden Rohres, so dass das Verlängerungsrohrstück in das zu verlängernde Rohr einschiebbar ist.

Hinsichtlich der nicht zur Belüftung dienenden Gerüstteile hat es sich demgegenüber als günstig erwiesen, wenn das Gestell ein Grundgerüst mit ausziehbaren Gerüstteilen umfasst.

Das Grundgerüst wird verlängert, indem Gerüstteile teleskopartig auseinander gezogen werden. Auf diese Weise gestaltet sich die Verlängerbarkeit von nicht zur Belüftung dienenden Gerüstteilen des Grundgestells besonders einfach. Zu diesen Gerüstteilen gehören beispielsweise ausschließlich der mechanischen Stabilisierung dienende Boden- oder Verbindungsteile des Grundgerüsts, einschließlich Verstrebungen dieser Teile.

Bei einer besonders bevorzugten Ausführungsform des erfindungsgemäßen IVC-Käfigsystems ist vorgesehen, dass die Aufnahme der Käfige jeweils eine sich zwischen Zuluft-Lüftungsrohr und Abluft-Lüftungsrohr erstreckende Adapterplatte umfasst, die Fixierungsmittel für den Käfig und mindestens zwei abdichtbare Lüftungsöffnungen aufweist, die mit einer Zuluftöffnung beziehungsweise mit einer Abluftöffnung eines Lüftungsrohres korrespondieren.

Jedem Käfig ist eine eigene Adapterplatte zugeordnet. Dabei bildet sie einen Teil der Belüftungseinrichtung für die Käfige und sie dient zur Fixierung eines Käfigs. Bei der Erweiterung des Käfigsystems wird auch eine entsprechend der zusätzlichen Käfige entsprechende Anzahl von Adapterplatten eingefügt.

Vorzugsweise weist die Adapterplatte eine Adapterbasisplatte auf, die an ihren den Lüftungsrohren zugewandten Stirnseiten jeweils mit einem das jeweilige Lüftungsrohr teilweise umgreifenden Klemmverschluss verbunden ist, der jeweils mit einer Lüftungsöffnung versehen ist, die mit der Zuluftöffnung beziehungsweise mit der Abluftöffnung des jeweiligen Lüftungsrohres korrespondiert.

Die Adapterplatte ist hierbei Teil der Belüftungseinrichtung und sie dient zur Fixierung eines Käfigs. Die stirnseitig vorgesehenen, bügelartig umklappbaren Klemmverschlüsse dienen zur Fixierung der Adapterplatte zwischen den beiderseitigen Lüftungsrohren. Die Klemmverschlüsse umgreifen dabei das jeweilige Lüftungsrohr. Dabei ist vorzugsweise ein Rastelement vorgesehen, das beim Schließen des Klemmverschlusses eine Rast- oder Clipsverbindung bildet und ein versehentliches Öffnen des Klemmverschlusses verhindert. Der Klemmverschlussbereich zeigt mindestens eine Lüftungsöffnung, die im Einbauzustand mit einer Zuluftöffnung beziehungsweise mit einer Abluftöffnung eines Lüftungsrohres korrespondiert. Über diese Lüftungsöffnung gelangt Luft in einen Käfig, beziehungsweise wird die Abluft aus einem Käfig über diese Lüftungsöffnung abgesaugt.

Die Lüftungsöffnung im umgelegten Klemmverschluss ist vorzugsweise auf der der Adapterbasisplatte abgewandten Seite vorgesehen, so dass der unterhalb der Adapterplatte angeordnete Käfig über die jeweiligen Lüftungsöffnungen be- und entlüftet wird. In dem Fall ist oberhalb der obersten Käfigreihe eine zusätzliche Reihe von Adapterplatten zur Be- und Entlüftung der Käfige der obersten Käfigreihe erforderlich. Im Fall einer Erweiterung des Käfigsystems werden nicht nur die zur Belüftung erforderlichen Rohre verlängert, sondern es wird auch eine der zusätzlichen Käfige entsprechende Anzahl von Adapterplatten eingefügt. Die Käfige der untersten Reihe des Käfigsystems stehen auf Adapterplatten, bei denen die Lüftungsöffnungen mit Blinddichtungen versehen sind.

In dem Zusammenhang hat es sich bewährt, wenn zur Abdichtung der Lüftungsöffnung des Klemmverschlusses und der Zuluftöffnung beziehungsweise der Abluftöffnung eine Dichtlippe vorgesehen ist, die ein segmentiertes Dichtungselement umfasst.

Die Lüftungsöffnung ist in diesem Fall auf der der Adapterbasisplatte abgewandten Seite des umgelegten Klemmverschlusses vorgesehen. Die Dichtlippe dichtet sowohl nach oben gegen das umgriffene Lüftungsrohr ab, als auch nach unten gegen die Oberseite des darunter eingesetzten Käfigs. Eine Besonderheit der Dichtlippe besteht darin, dass sie ein Dichtungselement umfasst, das segmentiert ist. Aus dem segmentierten Dichtungselement können Segmente vorgegebener Größe herausgeschnitten oder auf andere Weise abgetrennt werden, so dass die freie Öffnungsweite der Lüftungsöffnung einfach und definiert vergrößert und so an den Bedarf angepasst werden kann.

Die Dichtlippe ist außerdem leicht austauschbar, so dass erforderlichenfalls eine mit einer Lüftungsöffnung versehene Dichtlippe gegen eine andere ausgetauscht werden kann, bei der das Dichtungselement keine Lüftungsöffnung freigibt. Dadurch kann auch bei herausgenommenem Käfig der Eintrag von Falschluft in das Belüftungssystem verhindert werden.

Im einfachsten Fall ist die Adapterplatte als Kunststoffspritzgussteil ausgeführt.

Ein Kunststoffspritzgussteil ist einfach und kostengünstig und mit reproduzierbaren Abmessungen und Eigenschaften herstellbar.

Im Hinblick auf eine einfache und kostengünstige Konstruktion der Adapterplatte hat es sich als vorteilhaft erwiesen, wenn die bewegliche Verbindung von Adapterbasisplatte und Klemmverschlüssen durch ein Filmscharnier bewirkt wird.

Weiterhin hat es sich bewährt, wenn die Fixierungsmittel für den Käfig in der Adapterbasisplatte integrierte Blattfedern umfassen.

Die Adapterbasisplatte weist hierbei Blattfedern auf, die auf den auf die Adapterplatte aufgesetzten Käfig eine nach oben gerichtete Kraft ausüben und den Käfig so gegen den Klemmverschluss und die Lüftungsöffnung der darüber befindlichen Adapterplatte drücken. Die Blattfedern sind in der Adapterbasisplatte integriert. Somit bilden die Adapterbasisplatte, die Klemmverschlüsse und die Blattfedern ein monolithisches Bauteil, nämlich die Adapterplatte.

Hinsichtlich der Adapterplatte wird die oben genannte technische Aufgabe ausgehend von einer Adapterplatte der eingangs genannten Gattung erfindungsgemäß dadurch gelöst, dass sie Fixierungsmittel für die Fixierung des Käfigs sowie mindestens zwei abdichtbare Lüftungsöffnungen aufweist, die mit einer Zuluftöffnung beziehungsweise mit einer Abluftöffnung korrespondieren.

Die erfindungsgemäße Adapterplatte ist insbesondere geeignet zur Ausbildung eines IVC-Käfigsystems gemäß der Erfindung. Dabei bildet sie einen Teil der Belüftungseinrichtung und sie dient zur Fixierung eines Käfigs.

Bei einer besonders bevorzugten Ausführungsform ist vorgesehen, dass die Adapterplatte eine Adapterbasisplatte aufweist, die an zwei gegenüberliegenden Stirnseiten jeweils mit einem umklappbaren Klemmverschluss verbunden ist, der jeweils mit einer der Lüftungsöffnungen versehen ist.

Die umklappbaren Klemmverschluss dienen zur dichtenden Verbindung mit einem Lüftungsrohr, wobei der Klemmverschluss das jeweilige Lüftungsrohr bügelartig teilweise umgreift. Die Lüftungsöffnung des Klemmverschlusses korrespondiert im Einbauzustand mit der Zuluftöffnung beziehungsweise mit der Abluftöffnung des jeweiligen Lüftungsrohres.

Die Adapterplatte ist hierbei Teil der Belüftungseinrichtung und sie dient gleichzeitig zur Fixierung eines Käfigs. Die stirnseitig vorgesehenen, umklappbaren Klemmverschlüsse dienen zur Fixierung der Adapterplatte zwischen beiderseitig verkaufenden, parallelen Lüftungsrohren. Die Klemmverschlüsse umgreifen dabei das jeweilige Lüftungsrohr bügelartig.

Der Klemmverschlussbereich zeigt somit mindestens eine Lüftungsöffnung, die mit einer Zuluftöffnung beziehungsweise mit einer Abluftöffnung eines Lüftungsrohres korrespondiert. Über diese Lüftungsöffnung gelangt Luft in einen Käfig, beziehungsweise wird die Abluft aus einem Käfig über diese Lüftungsöffnung abgesaugt.

Im Fall einer Erweiterung des Käfigsystems werden nicht nur die zur Belüftung erforderlichen Rohre verlängert, sondern es wird auch eine der zusätzlichen Käfige entsprechende Anzahl von Adapterplatten eingefügt.

Es hat sich bewährt, wenn zur Abdichtung der Lüftungsöffnung des Klemmverschlusses und der Zuluftöffnung beziehungsweise der Abluftöffnung eine Dichtung vorgesehen ist, die eine segmentierte Dichtungslippe umschließt.

Die Lüftungsöffnung ist in diesem Fall auf der der Adapterbasisplatte abgewandten Seite des umgelegten Klemmverschlusses vorgesehen. Die Dichtlippe dichtet sowohl nach oben gegen das umgriffene Lüftungsrohr ab, als auch nach unten gegen die Oberseite eines darunter eingesetzten Käfigs. Eine Besonderheit dieser Dichtlippe besteht darin, dass sie ein Dichtelement umschließt, das segmentiert ist. Aus dem segmentierten Dichtelement können Segmente vorgegebener Größe herausgeschnitten oder auf andere Weise abgetrennt werden, so dass die freie Öffnungsweite der Lüftungsöffnung einfach und definiert vergrößert und so an den Bedarf angepasst werden kann.

Die Dichtlippe ist außerdem leicht austauschbar, so dass erforderlichenfalls eine mit einer Lüftungsöffnung versehene Dichtlippe gegen eine andere Dichtlippe ausgetauscht werden kann, bei der das Dichtelement keine Lüftungsöffnung freigibt. Dadurch kann auch bei herausgenommenem Käfig der Eintrag von Falschluft in das Belüftungssystem verhindert werden.

Bei einer alternativen und gleichermaßen bevorzugten Ausführungsform der Adapterplatte ist vorgesehen, dass sie im Bereich der Lüftungsöffnung eine integral verbundene Dichtlippe aufweist.

In dem Fall wird die Dichtlippe direkt an die Adapterplatte angespritzt. Dies vereinfacht die Montage des Käfigsystems und vermeidet Montagefehler.

Im einfachsten Fall ist die Adapterplatte als Kunststoffspritzgussteil ausgeführt.

Ein Kunststoffspritzgussteil ist einfach und kostengünstig und mit reproduzierbaren Abmessungen und Eigenschaften herstellbar.

Im Hinblick auf eine einfache und kostengünstige Konstruktion der erfindungsgemäßen Adapterplatte hat es sich als vorteilhaft erwiesen, wenn die bewegliche Verbindung von Adapterbasisplatte und Klemmverschlüssen durch ein Filmscharnier bewirkt wird.

Bei dem vom Klemmverschluss umgriffenen Lüftungsrohr handelt es sich dabei vorzugsweise um ein Rohr mit rundem Profil. Dadurch ergibt sich eine definierte Anlage des Filmscharniers auf der Abluft- beziehungsweise der Zuluftöffnung des Lüftungsrohres und eine verlässlichere Abdichtung.

Weiterhin hat es sich bewährt, wenn der Klemmverschluss mit Rastmitteln zur Verrastung mit einem Lüftungsrohr versehen ist, und die Fixierungsmittel für den Käfig in die Adapterbasisplatte integrierte Blattfedern umfassen.

Vorzugsweise ist ein Rastelement vorgesehen, das beim Schließen des Klemmverschlusses eine Rast- oder Clipsverbindung bildet und ein versehentliches Öffnen des Klemmverschlusses verhindert.

Die Adapterbasisplatte weist Blattfedern auf, die auf einen auf die Adapterplatte aufgesetzten Käfig eine nach oben gerichtete Kraft ausüben und den Käfig so gegen den Klemmverschluss und die Lüftungsöffnung der darüber befindlichen Adapterplatte drücken. Die Blattfedern sind vorzugsweise in der Adapterbasisplatte integriert. Somit bilden die Adapterbasisplatte, die Klemmverschluss und die Blattfedern ein monolithisches Bauteil, nämlich die Adapterplatte.

### Ausführungsbeispiel

Nachfolgend wird die Erfindung anhand eines Ausführungsbeispiels und einer Zeichnung näher erläutert. Dabei zeigt in schematischer Darstellung
- **Figur 1**: ein Ausführungsbeispiel des erfindungsgemäßen IVC-Käfigsystems in dreidimensionaler Ansicht,
- **Figur 2a**: ein Ausführungsbeispiel eines ausziehbaren Grundgestells für ein IVC- Käfigsystem gemäß der Erfindung,
- **Figur 2b**: das Grundgestell gemäß Figur 2a im ausgezogenen Zustand,
- **Figur 3**: eine Verlängerungsgruppe zur seitlichen Verlängerung eines IVC- Käfigsystems in Form eines Paares seitlich hinzuzufügender Adapter- platten mit passenden Lüftungsrohr-Verlängerungsstücken,
- **Figur 4**: eine Verlängerung eines erfindungsgemäßen IVC-Käfigsystems in der Höhe am Beispiel einer vollständigen Adapterplattenreihe einschließlich der Lüftungsrohre für Zuluft und Abluft sowie der Aufstockung der Sei- tenwände,
- **Figur 5**: eine Ausführungsform einer Adapterplatte gemäß der Erfindung in drei- dimensionaler Ansicht, und
- **Figur 6**: eine Dichtlippe mit segmentierter Dichtfläche zum Einsatz in einer A- dapterplatte gemäß der Erfindung in dreidimensionaler Ansicht.

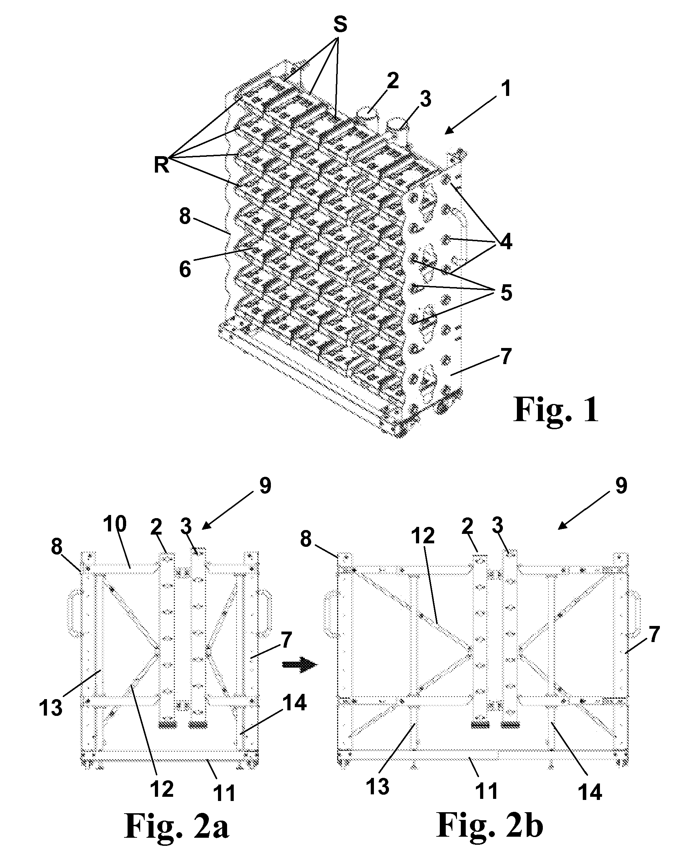

**Figur 1** zeigt in schematischer Darstellung eine dreidimensionale Ansicht eines in drei Richtungen erweiterbaren IVC-Käfigsystems gemäß der Erfindung. Hierfür wird ein Gestell eingesetzt, dass ein Grundmodul 1 aufweist, das dazu vorgesehen ist, eine Anzahl zusätzlicher Käfige (in der Figur 1 nicht dargestellt) aufzunehmen.

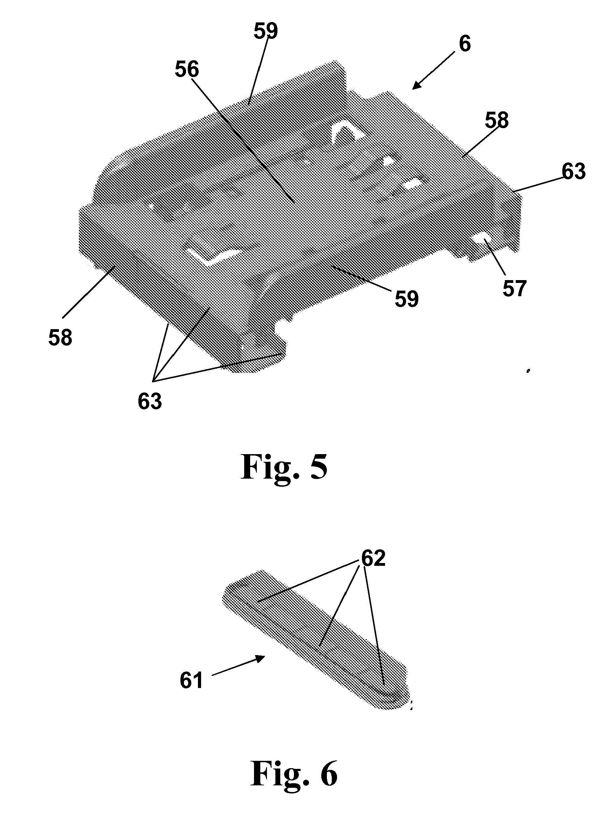

Zur Belüftung der Käfige sind Sammelrohre 2, 3 für die Zufuhr von Zuluft beziehungsweise für die Ableitung von Abluft aus den Käfigen vorgesehen. Aus den Sammelrohren 2, 3, die etwa in der Mitte des Grundmoduls 1 von oben nach unten verlaufen, verzweigen Luftwege in Form von Lüftungsrohren 4, 5 für Zu- und Abluft in jede Reihe. Das Sammel-Zuluftrohr 2 verteilt die Luft über die Zuluft-Lüftungsrohre 4 in die Käfige und über das Sammel-Abluftrohr 3 wird die Luft über die Abluft-Lüftungsrohre 5 wieder aus den Käfigen abgesaugt. Hierzu sind die Lüftungsrohre 4, 5 mit Zuluft- beziehungsweise Abluftöffnungen (in der Figur 1 nicht erkennbar) versehen. Die Zuluft- beziehungsweise Abluftöffnungen sind im vorgegebenem Käfigabstand an der Unterseite der Lüftungsrohre 4, 5 vorgesehen und als Längsschlitze mit einer Länge von etwa 14 cm ausgeführt. Die Längsschlitze sind mit einer segmentierten Dichtlippe ganz oder teilweise verschlossen, die weiter unten anhand Figur 6 noch näher erläutert wird.

Die Lüftungsrohre 4, 5 sind in Seitenteilen 7, 8 des Grundgerüsts 1 gelagert. Mit den Lüftungsrohren 4, 5, die rundes Profil mit einem Innendurchmesser von 34 mm haben, sind Adapterplatten 6 verbunden, die in Reihen R und Spalten S angeordnet sind und die - abgesehen von der obersten Reihe - jeweils zur Aufnahme eines Käfigs vorgesehen sind. Im Ausführungsbeispiel ist das Grundgestell 1 zur Aufnahme von 42 Käfigen geeignet, die in sieben Reihen R und sechs Spalten S rasterartig angeordnet sind.

Die Pumpen des "Airhandlers" können außerhalb des Grundmoduls 1 oder in einer Reihe des Grundmoduls 1 angeordnet sein. Im erst genannten Fall steht der Platz für eine Reihe R von Käfigen zur Verfügung.

Ein besonderes Merkmal des Grundgestells 1 ist seine Erweiterbarkeit. Das bedeutet, das Grundgestell 1 kann durch Anbringen von Erweiterungssätzen auch für eine größere Anzahl von Käfigen genutzt werden.

Für diese Erweiterung stehen drei Varianten zur Verfügung. Neben der Erweiterung zur Seite hin und nach oben ist auch eine Erweiterung durch Verdoppelung des einfachen oder des bereits erweiterten Grundgestells 1 möglich. Das erweiterte Grundgestell ist zur Aufnahme von bis zu 200 Käfigen geeignet.

Für die seitliche Erweiterung (Verlängerung) wird das Grundgestell 1 auseinander gezogen.

Hierfür weist das Grundgestell 1 eine ausziehbare Grundkonstruktion 9 mit ausziehbaren Querstäben 10, 11 und ausziehbaren Verstrebungen 12 auf. **Figur 2a** zeigt eine Seitenansicht des Grundgestells 1 im nicht ausgezogenen Zustand und **Figur 2b** im ausgezogenen Zustand, der zehn Käfigspalten ermöglicht. Die Querstäbe 10, 11 sind jeweils mit Stützen 13, 14 verbunden, die beim Ausziehen der Querstäbe gleitend mitbewegt werden.

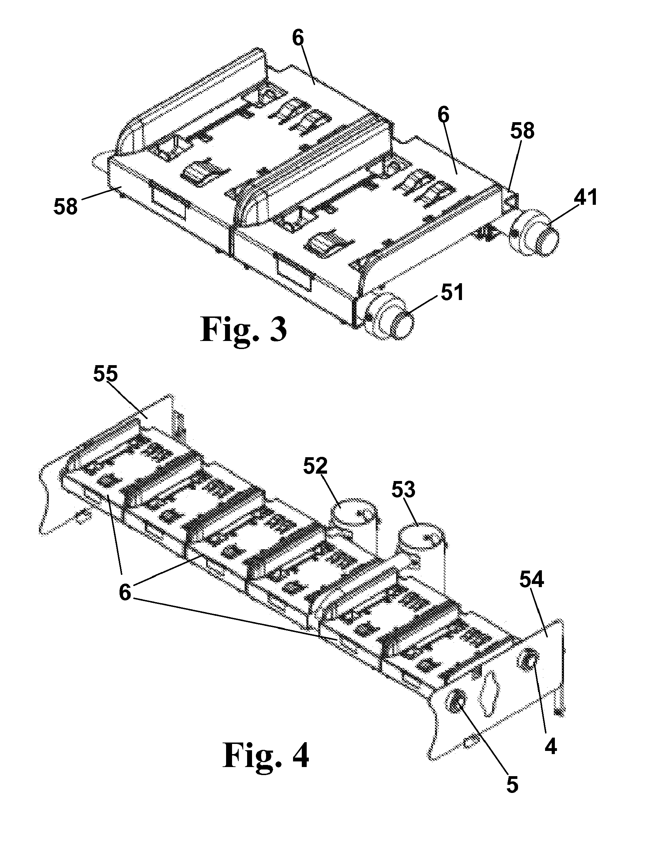

Nach dem Ausziehen des Grundgestells 1 werden die Lüftungsrohre 4, 5 verlängert und eine entsprechende Anzahl an Adapterplatten 6 eingefügt. Es ist vorgesehen, dass die Enden der Lüftungsrohre 4, 5 mit einem Blindstopfen versehen sind. Dieser wird an der zu verlängernden Seite entfernt und durch die Verlängerungsrohrstücke ersetzt. **Figur 3** zeigt ein Ausführungsbeispiel für einen Erweiterungssatz mit zwei Adapterplatten 6 und zwei Verlängerungsrohrstücken 41, 51 für die Zu- und Abluftversorgung. Die vorhandenen Lüftungsrohre 4, 5 werden mit den Verlängerungsrohrstücken 41, 51 verlängert. Die Verlängerungsrohrstücke 41, 51 haben einen Außendurchmesser von 32 mm und können so in der vorhandenen Lüftungsrohrstücke 4, 5 hineingesteckt werden. Der Ringspalt zwischen den Lüftungsrohrenden und den Verlängerungsrohrstücken 41, 51 ist mit einer Dichtung nach außen abgedichtet.

Der Erweiterungssatz für die seitliche Erweiterung des Grundmoduls 1 umfasst weiterhin Adapterplatten 6, die auf den Verlängerungsrohrstücke 41, 51 mittels integriertem Klemmverschluss 58 fixiert sind und deren Konstruktion und Funktion weiter unten noch näher beschrieben werden.

Für die Erweiterung des Grundmoduls 1 nach oben werden komplette Reihen von Erweiterungssätzen auf das Grundmodul 1 aufgesetzt. Vorbereitend für eine Erweiterung des Grundmoduls 1 nach oben ist vorgesehen, dass die Abschlusskappen der Sammelrohre 2, 3 abgenommen und an die offenen Enden mittels eines Zwischenrings mit Dichtfunktion dicht zusammengefügt werden.

Ein geeigneter Erweiterungssatz 14 in Form einer kompletten Reihe mit sechs Adapterplatten ist in **Figur 4** schematisch dargestellt. Der Erweiterungssatz 14 ist geeignet, die senkrechten Zuluft- und Abluft-Sammelrohre 2, 3 (Figur 1) mit entsprechenden Sammelrohr-Verlängerungsstücken 52, 53 nach oben zu verlängern. Hierzu werden die Sammelrohr-Verlängerungsstücke 52, 53 in die nach oben offenen Enden der vorhandenen Sammelrohre 2, 3 zusammen mit einer Dichtung eingesteckt.

Außerdem enthält der Erweiterungssatz 14 die nötigen zusätzlichen waagerecht verlaufenden Lüftungsrohre 4; 5, die mit den Sammelrohr-Verlängerungsstücken 52, 53 fluidisch verbunden sind, sowie die sechs zusätzlichen Adapterplatten 6. Die seitlichen Blechteile 54, 55, die zur Halterung der zusätzlichen Lüftungsrohre 4, 5 dienen, werden ebenfalls nach oben verlängert. Die Erweiterung nach oben kann ergänzend, wie zuvor beschrieben, seitlich erweitert werden.

In der doppelseitigen Variante ist das Grundmodul 1 spiegelsymmetrisch aufgebaut und von beiden Längsseiten zugänglich und umfasst daher die doppelte Anzahl von Käfigen. Hierzu haben das Sammel-Zuluftrohr 2 und das Sammel-Abluftrohr 3 über ihre Länge auf beiden Seiten Anschlussöffnungen für den Anschluss eines zweiten Satzes von Lüftungsrohren 4, 5. Bei der einseitigen Variante des Grundmoduls 1 sind die Öffnungen auf der einen Seite mit Blindklappen verschlossen.

Ein wesentliches Element des erfindungsgemäßen IVC-Käfigs ist die so genannte "Adapterplatte" 6, die in **Figur 5** schematisch dargestellt ist. Die Adapterplatte 6 ist ein Kunststoff-Spritzgussteil, und sie übernimmt die Funktionen der Lagerung eines Käfigs und des Abdichtens des Käfigs gegenüber der Umgebung.

Die Adapterplatte 6 setzt sich auf die waagerecht verlaufenden Lüftungsrohre 4, 5 beziehungsweise auf deren Verlängerungsrohrstücke 41, 51 auf und umgreift diese bügelartig mittels eines integral mit der Platte 6 verbundenen Klemmverschlusses 58. Hierzu weist die Adapterplatte 6 eine im Wesentlichen ebene Basisplatte 56 auf, an deren Vorder- und Hinterseite Filmscharniere 63 integriert sind, die eine Wicklung um die Lüftungsrohre 4, 5 ermöglichen. Mittels Widerhaken in dem bügelartig umgreifenden Klemmverschluss 58, die sich von unten in die Adapterplatte 6 einhängen, klemmt sich diese an den Lüftungsrohren 4, 5 fest.

Zur Führung des Käfigs sind an der Basisplatte 56 seitliche Stege 59 vorgesehen. Die Anpressung des Käfigs wird durch Blattfedern 60 erreicht, die ebenfalls in die Basisplatte 6 integriert sind. Hierdurch wird der Käfig nach oben gedrückt und legt sich an Dichtungen an, die in den umgreifenden Klemmverschlüssen 8 der darüber liegenden Adapterplatte 6 vorgesehen sind.

In den beiden die Lüftungsrohre 4, 5 bügelartig umgreifenden Klemmverschlüssen 58 sind Längsschlitze 57 vorgesehen und bei umgelegtem Klemmverschluss 58 so angeordnet, dass sie mit den jeweiligen Abluft- oder Zuluftöffnungen der Lüftungsrohre 4, 5 zusammenfallen.

In die Längsschlitze 57 ist eine Dichtlippe 61 eingesetzt, wie sie die dreidimensionale Darstellung von **Figur 6** schematisch zeigt.

Die Dichtlippe 61 besteht aus Silikon. Sie wird in die entsprechenden Aussparungen 57 der Adapterplatte 6 eingesetzt und dichtet im Bereich der Öffnungen für Zu- und Abluft von Lüftungsrohren 4, 5 und Käfigen ab, und zwar zwischen dem jeweiligen Lüftungsrohr 4, 5 und dem umgeklappten Klemmverschluss 58 der Adapterplatte 6, und zum anderen zwischen der Adapterplatte 6 und dem darunter angeordneten Käfig. Eine Besonderheit der Dichtlippe 61 besteht darin, dass sie ein segmentierbares flächiges Dichtelement 62 umschließt. Die Segmente 62 können einzeln entfernt und so die freie Öffnung der Dichtlippe vergrößert werden. Der von der Dichtlippe 61 durchgelassene Luftstrom kann so für jeden Käfig an individuelle Erfordernisse angepasst werden. Durch wenige Handgriffe können im Fall einer Käfigentnahme eine Dichtlippe 61 mit geöffneten Segmenten 62 durch eine Dichtlippe mit geschlossenen Segmenten 62 ersetzt werden, was einen Falschlufteffekt verhindert.

## Patentansprüche

1. IVC-Käfigsystem, umfassend ein Gestell (1) zur Aufnahme einer Vielzahl rasterartig in Käfigreihen und Käfigspalten angeordneten Käfigen, ein Belüftungssystem (2; 3; 5; 6) zur Belüftung der Käfige und eine Belüftungssteuerung, wobei das Gestell (1) gegenüberliegende Seitenwände (7, 8) aufweist, zwischen denen sich in vorgegebenem Höhenabstand waagerecht und parallel zueinander verlaufende Paare von Lüftungsrohren (4, 5) erstrecken, an denen die Käfige abnehmbar gelagert sind, und die jeweils ein Zuluft-Lüftungsrohr (4) und ein Abluft-Lüftungsrohr (5) bilden, wobei die Zuluft-Lüftungsrohre (4) über ihre Länge mit Zuluftöffnungen für die Zufuhr von Zuluft in die Käfige versehen und mit einem Sammel-Zuluftrohr (2) fluidisch verbunden sind, und wobei die Abluft-Lüftungsrohre (5) über ihre Länge mit Abluftöffnungen zur Ableitung von Abluft aus den Käfigen versehen und mit einem Sammel-Abluftrohr (3) fluidisch verbunden sind, **dadurch gekennzeichnet, dass** die Lüftungsrohr-Paare (4; 5) und/oder Sammel-Zuluftrohr (2) und Sammel-Abluftrohr (3) verlängerbar ausgebildet sind und/oder dass Sammel-Zuluftrohr (2) und Sammel-Abluftrohr (3) über ihre Länge mit einer zweiten Reihe von Anschlüssen für Zuluft-Lüftungsrohre (4) und Abluft-Lüftungsrohre (5) versehen sind.

2. Käfigsystem nach Anspruch 1, **dadurch gekennzeichnet, dass** die Verlängerbarkeit der Lüftungsrohr-Paare (4; 5) und/oder von Sammel-Zuluftrohr (2) und Sammel-Abluftrohr (3) mittels Verlängerungsrohrstücken (41; 51; 52; 53) erfolgt.

3. Käfigsystem nach Anspruch 2, **dadurch gekennzeichnet, dass** die Verlängerungsrohrstücke (41; 51; 52; 53) an die Enden der jeweils zu verlängernden Lüftungsrohre (4; 5) und/oder Sammelrohre (2; 3) angesetzt werden.

4. Käfigsystem nach Anspruch 2 oder 3, **dadurch gekennzeichnet, dass** das Verlängerungsrohrstück (41; 51; 52; 53) einen Innendurchmesser aufweist, der größer ist als der Außendurchmesser des jeweilig zu verlängernden Rohres (2; 3; 4; 5), so dass das Verlängerungsrohrstück (41; 51; 52; 53) auf das zu verlängernde Rohr (2; 3; 4; 5) aufschiebbar ist, oder dass das Verlängerungsrohrstück (41; 51; 52; 53) einen Außendurchmesser aufweist, der kleiner ist als der Innendurchmesser (41; 51; 52; 53) des jeweilig zu verlängernden Rohres (2; 3; 4; 5), so dass das Verlängerungsrohrstück (41; 51; 52; 53) in das zu verlängernde Rohr (2; 3; 4; 5) einschiebbar ist.

5. Käfigsystem nach einem der vorhergehenden Ansprüche, **dadurch gekennzeichnet, dass** das Gestell (1) ein Grundgerüst (9) mit ausziehbaren Gerüstteilen (10; 11; 12) umfasst.

6. Käfigsystem nach einem der vorhergehenden Ansprüche, **dadurch gekennzeichnet, dass** die Aufnahme der Käfige jeweils eine sich zwischen Zuluft-Lüftungsrohr (4) und Abluft-Lüftungsrohr (5) erstreckende Adapterplatte (6) umfasst, die Fixierungsmittel (56, 59, 60) für den Käfig und mindestens zwei abdichtbare Lüftungsöffnungen (57) aufweist, die mit einer Zuluftöffnung beziehungsweise mit einer Abluftöffnung eines Lüftungsrohres (4; 5) korrespondieren.

7. Käfigsystem nach Anspruch 6, **dadurch gekennzeichnet, dass** die Adapterplatte (6) eine Adapterbasisplatte (56) aufweist, die an ihren den Lüftungsrohren (4; 5) zugewandten Stirnseiten jeweils mit einem das Lüftungsrohr (4; 5) teilweise umgreifenden Klemmverschluss (58) verbunden ist, der jeweils mit einer Öffnung (57) versehen ist, die mit der Zuluftöffnung beziehungsweise mit der Abluftöffnung des jeweiligen Lüftungsrohres (4; 5) korrespondiert.

8. Käfigsystem nach Anspruch 7, **dadurch gekennzeichnet, dass** zur Abdichtung zwischen der Öffnung (57) des Klemmverschlusses (58) und der Zuluftöffnung beziehungsweise der Abluftöffnung eine Dichtlippe (61) vorgesehen ist, die ein segmentiertes Dichtelement (62) umschließt.

9. Käfigsystem nach einem der Ansprüche 6 bis 8, **dadurch gekennzeichnet, dass** die Adapterplatte (6) als Kunststoffspritzgussteil ausgeführt ist.

10. Käfigsystem nach einem der Ansprüche 7 bis 9, **dadurch gekennzeichnet, dass** die Adapterbasisplatte (56) mit den Klemmverschlüssen (58) durch ein Filmscharnier beweglich verbunden ist.

11. Käfigsystem nach einem der Ansprüche 7 bis 10, **dadurch gekennzeichnet, dass** die Fixierungsmittel für den Käfig Blattfedern (60) umfassen, die in der Adapterbasisplatte (56) integriert sind.

12. Adapterplatte zur Anbindung eines Käfigs an ein IVC-Käfigsystem, **dadurch gekennzeichnet, dass** sie Fixierungsmittel (56, 59, 60) für die Fixierung des Käfigs sowie mindestens zwei abdichtbare Lüftungsöffnungen aufweist, die mit einer Zuluftöffnung beziehungsweise mit einer Abluftöffnung korrespondieren.

13. Adapterplatte nach Anspruch 12, **dadurch gekennzeichnet, dass** eine Adapterbasisplatte (6) vorgesehen ist, die an zwei gegenüberliegenden Stirnseiten jeweils mit einem Klemmverschluss (58) verbunden ist, der jeweils mit einer der Lüftungsöffnungen (57) versehen ist.

14. Adapterplatte nach Anspruch 13, **dadurch gekennzeichnet, dass** die Lüftungsöffnung (57) des Klemmverschlusses (58) mit einer Dichtlippe (61) versehen ist, die ein segmentiertes Dichtelement (62) umschließt.

15. Adapterplatte nach einem der Ansprüche 10 bis 14, **dadurch gekennzeichnet, dass** die Adapterplatte als Kunststoffspritzgussteil ausgeführt ist, und dass die Adapterbasisplatte (56) mit den Klemmverschlüssen (58) durch ein Filmscharnier beweglich verbunden ist.
